# EUROPEAN PATENT APPLICATION

(11) **EP 4 621 365 A1**
(43) Date of publication of application: **24.09.2025**
(21) Application number: 25165408.3
(22) Date of filing: 21.03.2025
(51) Int. Cl.: G01H 9/00, G01V 1/28

(54) **METHODS AND SYSTEMS FOR USING DISTRIBUTED ACOUSTIC SENSING DATA WITH FULL WAVEFORM INVERSION**

(30) Priority: 22.03.2024 US 202463568510 P
(71) Applicant: Services Pétroliers Schlumberger, 75007 Paris (FR); GeoQuest Systems B.V., 2514 JG The Hague (NL)
(72) Inventor: RICKETT, James, Crawley, CB3 0EL (GB); XU, Zhen, Houston, TX 77077 (US); ZHAO, Xikai, Vancouver, V5Y 3G6 (CA)
(74) Representative: Schlumberger Intellectual Property Department

(57) **Abstract**

A method implements the use of distributed acoustic sensing data with full waveform inversion. The method involves selecting a set of discrete locations along a fiber to act as a set of reciprocal source points, where the fiber provides sensor data sensitive to one or more of strain and strain-rate. The method further involves sorting the sensor data into a set of reciprocal source point gathers to generate sorted data. The method further involves modelling synthetic receiver data via reciprocity by injecting synthetic source data into a seismic model using the set of reciprocal source points. The method further involves updating the seismic model to reduce error between the sorted data and the synthetic receiver data.

## Description

### CROSS REFERENCE TO RELATED APPLICATIONS

This application claims the benefit of U.S. Provisional Application No. 63/568,510, filed March 22, 2024, which is incorporated by reference herein.

### BACKGROUND

Distributed acoustic sensing (DAS) seismic acquisition may be used as a monitoring solution for carbon capture, utilization, and storage (CCUS) and time-lapse oil and gas applications. The use of distributed acoustic sensing drives the development of technology and workflows to enable the utilization of data from distributed acoustic sensing systems within full waveform inversion (FWI) for imaging and earth-model building.

Distributed acoustic sensing systems use fiber (e.g., optical fiber) that is sensitive to the strain or strain-rate parallel to the fiber. The sensitivity is related to the spatial derivative of the displacement (for the case of strain) or velocity (for the case of strain-rate). Workflows using strain and strain-rate data (collectively referred to as strain data) may transform the strain data to equivalent "velocity" data. The transformation allows the workflow to use full waveform inversion workflows designed for conventional geophone data that is produced by geophones recording particle velocity and particle acceleration. The transformation involves undoing the spatial convolution with a spatial deconvolution, which can boost noise particularly for low-spatial frequencies, corresponding to horizontal events on the gather.

### SUMMARY

In general, in one or more aspects, the disclosure relates to a method for using distributed acoustic sensing data with full waveform inversion. The method involves selecting a set of discrete locations along a fiber to act as a set of reciprocal source points, where the fiber provides sensor data sensitive to one or more of strain and strain-rate. The method further involves sorting the sensor data into a set of reciprocal source point gathers to generate sorted data. The method further involves modelling synthetic receiver data via reciprocity by injecting synthetic source data into a seismic model using the set of reciprocal source points. The method further involves updating the seismic model to reduce error between the sorted data and the synthetic receiver data.

In general, in one or more aspects, the disclosure relates to a system that includes at least one processor and an application that executes on the at least one processor. Executing the application performs selecting a set of discrete locations along a fiber to act as a set of reciprocal source points, where the fiber provides sensor data sensitive to one or more of strain and strain-rate. Executing the application further performs sorting the sensor data into a set of reciprocal source point gathers to generate sorted data. Executing the application further performs modelling synthetic receiver data via reciprocity by injecting synthetic source data into a seismic model using the set of reciprocal source points. Executing the application further performs updating the seismic model to reduce error between the sorted data and the synthetic receiver data.

In general, in one or more aspects, the disclosure relates to a non-transitory computer readable medium including instructions executable by at least one processor. Executing the instructions performs selecting a set of discrete locations along a fiber to act as a set of reciprocal source points, where the fiber provides sensor data sensitive to one or more of strain and strain-rate. Executing the instructions further performs sorting the sensor data into a set of reciprocal source point gathers to generate sorted data. Executing the instructions further performs modelling synthetic receiver data via reciprocity by injecting synthetic source data into a seismic model using the set of reciprocal source points. Executing the instructions further performs updating the seismic model to reduce error between the sorted data and the synthetic receiver data.

Other aspects of one or more embodiments may be apparent from the following description and the appended claims.

### BRIEF DESCRIPTION OF DRAWINGS

FIG. 1 shows a diagram in accordance with the disclosure.
FIG. 2 shows a method in accordance with the disclosure.
FIG. 3 and FIG. 4 show examples in accordance with the disclosure.
FIG. 5.1 and FIG. 5.2 show computing systems in accordance with the disclosure.

Similar elements in the various figures may be denoted by similar names and reference numerals. The features and elements described in one figure may extend to similarly named features and elements in different figures.

### DETAILED DESCRIPTION

The disclosure describes methods and systems for using distributed acoustic sensing data with full waveform inversion to address the issue of increased noise when using distributed acoustic sensing data transformed to velocity data for full waveform inversion. The signal-to-noise ratio in distributed acoustic sensing data may be significantly degraded when converting strain rate measurements to particle velocity, which may be done for full waveform inversion. By directly utilizing the strain rate data within the full waveform inversion algorithm, the proposed methods maintain a higher signal-to-noise ratio, resulting in more accurate subsurface velocity models. The disclosure describes executing full waveform inversion on distributed acoustic sensing data. As a part of the full waveform inversion process, the strain and strain-rate data (collectively referred to as sensor data) is inverted directly via reciprocal modelling. The full waveform inversion process avoids the conversion of the sensor data to velocity data before performing full waveform inversion. Reciprocal modelling includes injecting a source function that captures the directionality of the sensor of the strain data, for example, by injecting a pair of velocity (or body force) sources with opposite signs, separated by a gauge length.

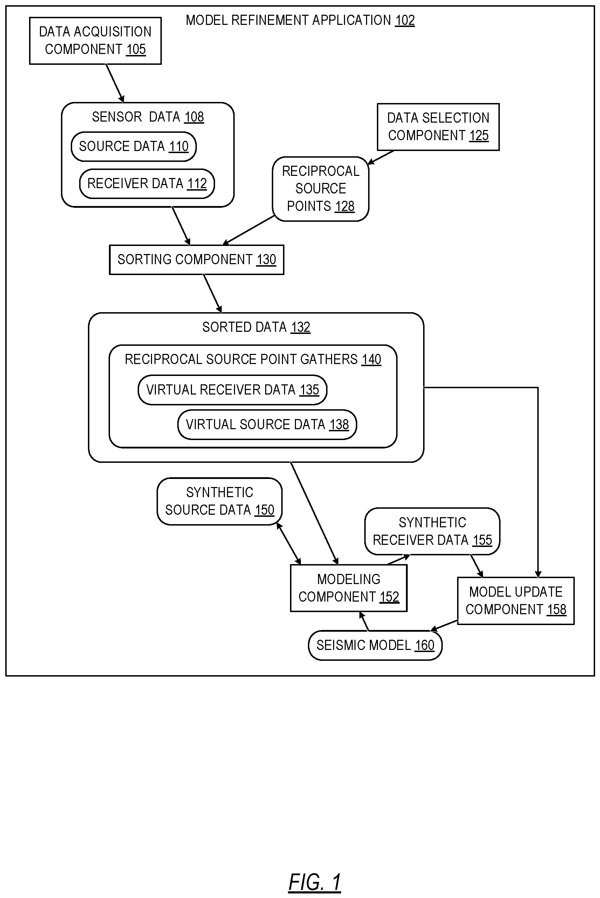

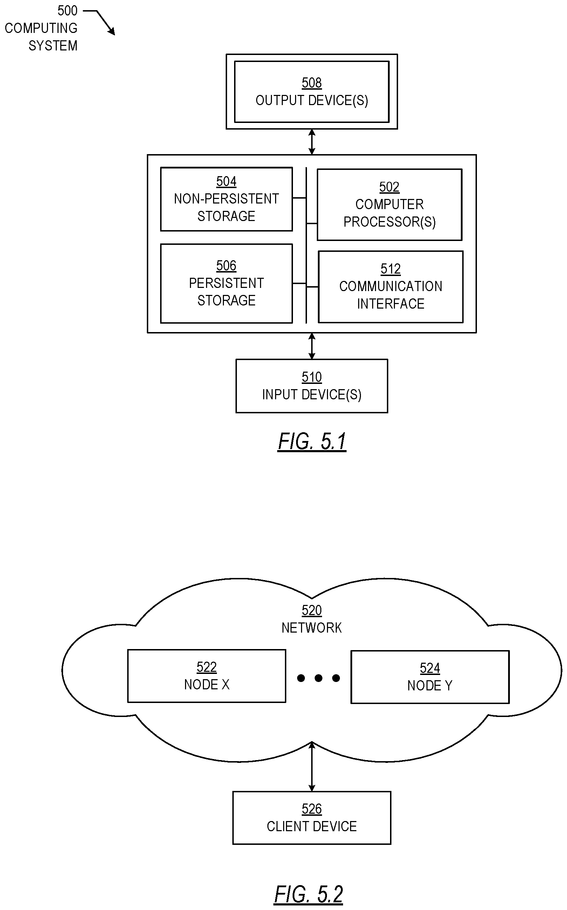

Turning to FIG. 1, the model refinement application (102) may be part of a system for using distributed acoustic sensing data with full waveform inversion. The model refinement application (102) may generate the seismic model (160) using the sensor data (108). The model refinement application (102) may include hardware and software components that may be a part of and execute on a computing system, such as those described in the other figures, e.g., FIG. 5.1 and FIG. 5.2.

The data acquisition component (105) of the model refinement application (102) acquires the sensor data (108). The data acquisition component (105) acquires the sensor data (108) from equipment that processes seismic waves, which may include distributed acoustic sensors. The equipment may control a source, such as a vibrating truck or explosives, to generate seismic waves. A network of receivers, strategically positioned across the survey area, are instructed to detect the ground motion caused by the waves. The receivers, which may include distributed acoustic sensing systems, translate the mechanical vibrations into electrical signals. The electrical signals are received, amplified for clarity, and then digitized for efficient storage and subsequent analysis.

The sensor data (108) is data collected by equipment that may use a distributed acoustic sensing (DAS) system with measurements of strain or strain-rate along a fiber optic cable. The distributed acoustic sensing system probes the fiber optic cable to detect minute changes in the optical properties of the fiber caused by external perturbations, such as seismic waves, ground vibrations, or other mechanical disturbances. The changes are translated into strain or strain-rate measurements at discrete points along the fiber, providing high-resolution spatial and temporal information about the detected phenomena. The sensor data (108) may be seismic data that measures vibrations traveling through the Earth. The sensor data (108) may also include the source data (110) and the receiver data (112).

The source data (110) is information in the sensor data (108) related to the origin of events or phenomena that generate the signals detected by a sensing system. The source data (110) may include the location and timing of natural and man-made events, including earthquakes, volcanic eruptions, explosions, the firing of air guns, *etc.*

The receiver data (112) is information in the sensor data (108) pertaining to the sensing system and its configuration. The receiver data (112) may include the location and orientation of sensors, the characteristics of the sensing elements, the sampling rate and spatial resolution of the measurements, and any other parameters that influence the response to external stimuli. For systems using distributed acoustic sensing, the location and properties of the fiber optic cable may be included in the characteristics within the receiver data (112).

The data selection component (125) selects the reciprocal source points (128). The data selection component (125) may process the sensor data (108) to identify the location of points along an optic fiber used as part of a distributed acoustic sensing sensor as points where seismic wave information is received and the location of points where seismic waves are triggered, e.g., the location of an air gun. The distance between the points along the fiber may be half the wavelength of the highest frequency used by the seismic source.

The reciprocal source points (128) are pairs of locations where the transmission and reception of signals can be interchanged without altering the measured response. In other words, if a signal is transmitted from the first point and received at the second point, and then the same signal is transmitted from the second point and received at the first point, the measured responses should be identical (or exhibit a known, predictable relationship) under ideal conditions. The reciprocal source points (128) may include the points along a fiber and the points of the sources.

The sorting component (130) sorts the sensor data (108) using the reciprocal source points (128) to generate the sorted data (132). The sorting may swap the identity of a location as a source or a receiver. For example, the points that correspond to the location of a fiber that acted as a receiver may be identified as a source and the location of a source *(e.g.,* an air gun) may be identified as a receiver.

The sorted data (132) is a version of the sensor data (108) that has been processed *(i.e.,* sorted) to reverse the identification of the sources and receivers. The sorted data (132) includes the reciprocal source point gathers (140).

The reciprocal source point gathers (140) are sets of seismic data acquired by interchanging the positions of seismic sources and receivers at a pair of locations. The reciprocal source point gathers (140) include seismic traces with virtual sources and virtual receivers corresponding to the virtual source data (138) and the virtual receiver data (135). The virtual sources of the virtual source data (138) correspond to the physical receivers of the receiver data (112). The virtual receivers of the virtual receiver data (135) correspond to the physical sources from the source data (110).

The virtual receiver data (135) is a version of the source data (110) with the physical source swapped to be a virtual receiver. The virtual source data (138) is a version of the receiver data (112) with the physical receiver swapped to be a virtual source.

The synthetic source data (150) is synthetic data generated from the virtual source data (138) that represents sources of seismic waves. Where the virtual source data (138) may be a copy of the source data (110), the synthetic source data (150) may be further processed to add and subtract features from multiple sources and different types of sources from the virtual source data (138) to use in generating the synthetic receiver data (155). Different types of synthetic data may be generated including data that represents a pressure source, a pressure dipole source, a second-derivative pressure source, a second-derivative pressure source with gauge length, *etc.* The synthetic source data (150) may be generated by the modeling component (152) from the sorted data (132).

The modeling component (152) processes the sorted data (132) to refine the seismic model (160). The modeling component (152) processes the sorted data (132) to generate the synthetic source data (150). The modeling component (152) processes the synthetic source data (150), using the seismic model (160) to generate synthetic receiver data (155).

The synthetic receiver data (155) is synthetic data generated from the synthetic source data (150) using the seismic model (160). The synthetic receiver data (155) represents the receivers of seismic waves. The synthetic receiver data (155) may correspond to the virtual receiver data (135) similar to the correspondence between the synthetic source data (150) and the virtual source data (138).

The model update component (158) combines the synthetic receiver data (155) with the sorted data (132) to generate updates for the seismic model (160). The model update component (158) may compare the synthetic receiver data (155) with the virtual receiver data (135) to generate updates for the seismic model (160) using a form of back propagation.

The seismic model (160) is a mathematical model that predicts seismic output data from seismic input data. The seismic model (160) may process the synthetic source data (150) as seismic input data to generate the synthetic receiver data (155) as seismic output data. The seismic model (160) is a mathematical representation of the Earth's subsurface properties, such as density, velocity, and attenuation, that controls the propagation of seismic waves, which may be represented by parameters of the seismic model (160). The seismic model (160) may include a three-dimensional grid of physical parameters that are assigned values based on geological, geophysical, and other relevant data. The initial values may be coarse values that may lack the resolution to be used for further analysis. The values of the parameters are updated based on the processing of the sensor data (108) to increase the resolution. The seismic model (160) may be part of a waveform inversion engine that performs full waveform inversion on seismic data. The seismic model (160) may be a full waveform inversion model that may be one of an elastic model, a viscoelastic model, and an acoustic model.

An elastic model represents the subsurface of the Earth as a medium that exhibits elastic properties, such as the ability to deform under stress and return to its original shape upon stress release. An elastic model may incorporates parameters like density, P-wave velocity, S-wave velocity, and anisotropy to describe the propagation of seismic waves through the subsurface.

A viscoelastic model extends the concept of an elastic model by incorporating energy dissipation mechanisms within the subsurface. A viscoelastic model represents materials exhibiting both elastic and viscous behavior, meaning the materials may store and release energy (elasticity) while also dissipating energy through internal friction (viscosity). Viscoelastic models incorporate parameters such as quality factor (Q) to describe the degree of energy dissipation.

An acoustic model is one in which the bulk modulus is specified. The propagation in an acoustic model does not support shear stress, and so no S-waves are propagated.

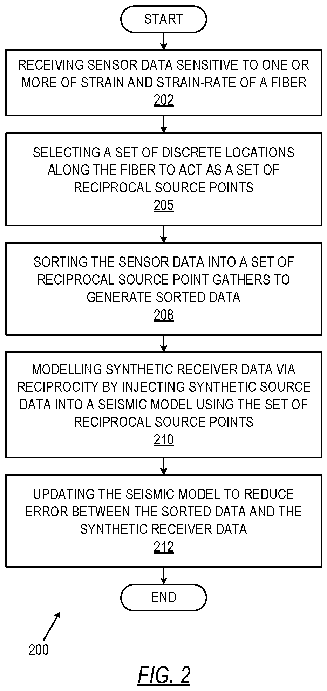

FIG. 2 shows a flowchart of a method implementing methods and systems for using distributed acoustic sensing data with full waveform inversion. The method of FIG. 2 may be implemented using the systems described in the other figures, and one or more of the steps may be performed on, or received at, one or more computer processors. The system may include at least one processor and an application that, when executing on the at least one processor, performs the method. A non-transitory computer readable medium may include instructions that, when executed by one or more processors, perform the method. The outputs from various components (including models, functions, procedures, programs, processors, *etc.*) for performing the method may be generated by applying a transformation to inputs using the components to create the outputs without using mental processes or human activities.

Turning to FIG. 2, the process (200) may be used to refine a seismic model based on data from a distributed acoustic sensing sensor. The process (200) may include multiple steps *(e.g.,* Block 202 through Block 212) that may execute on the components described in the other figures, including those of FIG. 1, FIG. 1, FIG. 5.1, and 12.2.

Block 202 includes receiving sensor data sensitive to one or more of strain and strain-rate of a fiber. The step of receiving sensor data sensitive to one or more of strain and strain-rate of a fiber may involve receiving the sensor data acquired with a DAS sensing system. The DAS system is first initialized, configuring parameters such as sampling rate, measurement bandwidth, and averaging time. Subsequently, the data acquisition process is triggered, initiating the transmission of interrogation pulses along the fiber. As the pulses propagate, the pulses interact with variations in the refractive index of the fiber, resulting in a backscattered signal of light. The backscattered signal, carrying information about changes in strain and strain-rate along the fiber, is continuously received by the system. The raw backscattered data is then processed using signal processing algorithms, such as phase-sensitive optical time-domain reflectometry (φ-OTDR) or distributed acoustic sensing (DAS) algorithms, to extract strain and strain-rate information along the fiber. The processed data, including strain and strain-rate information, is stored for further analysis and interpretation.

Receiving the sensor data may further include receiving the sensor data acquired with a receiver system including the fiber as an optical fiber as part of a distributed acoustic sensor (DAS). In a Distributed Acoustic Sensor (DAS), the optical fiber itself serves as the sensing element. For example, a standard single-mode fiber optic cable, composed of a thin glass core that is surrounded by a cladding layer with a lower refractive index, may be used. The arrangement of a thin glass core surrounded by a cladding layer with a lower refractive index allows for the guidance of light along the core. When external forces, such as vibrations or acoustic waves, interact with the optical fiber, minute strains and changes in the geometry of the fiber are induced. The subtle deformations alter the propagation of light within the optical fiber, causing shifts in the phase of the light waves. Measuring the phase shifts along the length of the optical fiber may be used to identify the localization and characterization of acoustic events with high spatial resolution.

Block 205 includes selecting a set of discrete locations along the fiber to act as a set of reciprocal source points. Points may be selected such that the maximum distance between any two adjacent points is no greater than twice the highest wavelength of the acoustic signals of interest. Using the selected points may capture the spatial variations of the acoustic waves. If the spacing is too large, high-frequency components of the acoustic signals may be missed, leading to a loss of resolution and potentially inaccurate event localization. Conversely, too small a spacing may lead to redundant data and increased computational burden without significant improvement in performance. Determining the highest wavelength of interest may be application specific. For example, in seismic monitoring, the wavelengths of interest may be relatively long (meters), while in applications such as pipeline leak detection, higher frequencies and shorter wavelengths may be more relevant (e.g., a range of 1 kHz to 100 kHz).

Block 208 includes sorting the sensor data into a set of reciprocal source point gathers to generate sorted data. To sort the sensor data, the sensor data is broken into traces, which are the time series recordings at a specified receiver location due to a single specified source. The traces are sorted/collected into gathers such that, within each gather, the traces share a common-receiver location, which is called a common-receiver gather. The conceptual location of sources and receivers are reversed, so the common-receiver gather is treated as a common-source gather for imaging purposes. The reversal of sources and receivers may be performed before sorting and collecting the traces into gathers. Sorting the data into a common-receiver gather is the same as sorting the data into a reciprocal source gather. As part of the reversal, the original receivers may be referred to as virtual sources and the original sources may be referred to as virtual receivers.

Sorting the sensor data may further include organizing the sensor data for a reciprocal source point gather, of the set of reciprocal source point gathers, to be for a discrete location for the reciprocal source point gather. For example, the data may be sorted based on source locations so that traces associated with the same source are together. A gather may include the traces for a source (physical or virtual) at the discrete location.

Block 210 includes modelling synthetic receiver data via reciprocity by injecting synthetic source data into a seismic model using the set of reciprocal source points. The seismic model representing the subsurface geology, including properties such as density, velocity, and attenuation, is loaded. Synthetic source data representing seismic waves emitted by a hypothetical source is generated. The synthetic source data may be generated from the reciprocal source point gathers. The synthetic source data is injected into the seismic model at a specified source location. Wave propagation through the model is simulated utilizing numerical methods such as finite-difference or finite-element methods. At specified receiver locations within the model, the simulated ground motion is recorded. The recorded data represents the synthetic receiver data that would be observed at those locations if the virtual source were to be activated in the real world.

Modeling the synthetic receiver data may further include injecting the synthetic source data as a pair of seismic sources separated by a gauge length. The pair of seismic sources may be separated by a gauge length measured in meters. As an example, the gauge length may be in a range of 10 to 500 meters. Types of seismic sources include body force sources, velocity sources, pressure gradient sources, *etc.* The difference between a velocity source and a body force source may be a scale factor and a time derivative. The seismic sources may mimic the directional response of the fiber sensor.

Modeling the synthetic receiver data may further include injecting the synthetic source data with directivity mimicking a directional response of a sensitivity to one or more of strain and strain-rate of the fiber. The directivity may be mimicked by using dipoles, which may include a positive pole and a negative pole. The positive pole and this negative poll may be separated by a dipole length. As an example, the dipole length may be 10 meters.

Modeling the synthetic receiver data may further include recording a wavefield at a set of locations of a set of physical sources. The locations of the physical sources correspond to the locations of the virtual receivers.

Block 212 includes updating the seismic model to reduce error between the sorted data and the synthetic receiver data. A seismic model may be updated using a full waveform inversion process. In full waveform inversion, the error between the synthetic receiver data generated by the model and the observed data *(i.e.,* the virtual receiver data) is calculated with a misfit function, which measures the discrepancy between the recorded seismic signals and the simulated signals generated by the current model. The gradient from the misfit function with respect to the model parameters may be computed using backpropagation, to calculate the sensitivity of the misfit *(i.e.,* the error) to small perturbations in the model parameters. The model parameters are updated based on the computed gradient using a gradient-based optimization algorithm, such as conjugate gradient, to adjust the model parameters in the direction that most effectively reduces the misfit.

Updating the seismic model may further include repeatedly modelling the synthetic receiver data and updating the seismic model to reduce the error. Forward modeling, the step of generating synthetic receiver data, is repeated with the updated model parameters, and new synthetic receiver data is generated. The new synthetic receiver data may then be used to generate additional updates to the seismic model to further refine and improve the accuracy of the seismic model.

The process (200) may further include selecting an initial seismic model from which to update and form the seismic model. The selection may be received through a user interface in which a user identifies the initial seismic model.

The process (200) may further include presenting a seismic image generated from one or more of an initial seismic model and the seismic model. A seismic image may be generated from the seismic model by extracting the relevant model parameters from the final, optimized seismic model. The extracted parameters are then visualized using two-dimensional or three-dimensional visualizations, color-coded maps, cross-sections, *etc.* The generated image may be analyzed to identify and highlight geological structures, such as faults, folds, and fluid-filled reservoirs based on the data extracted from the seismic model.

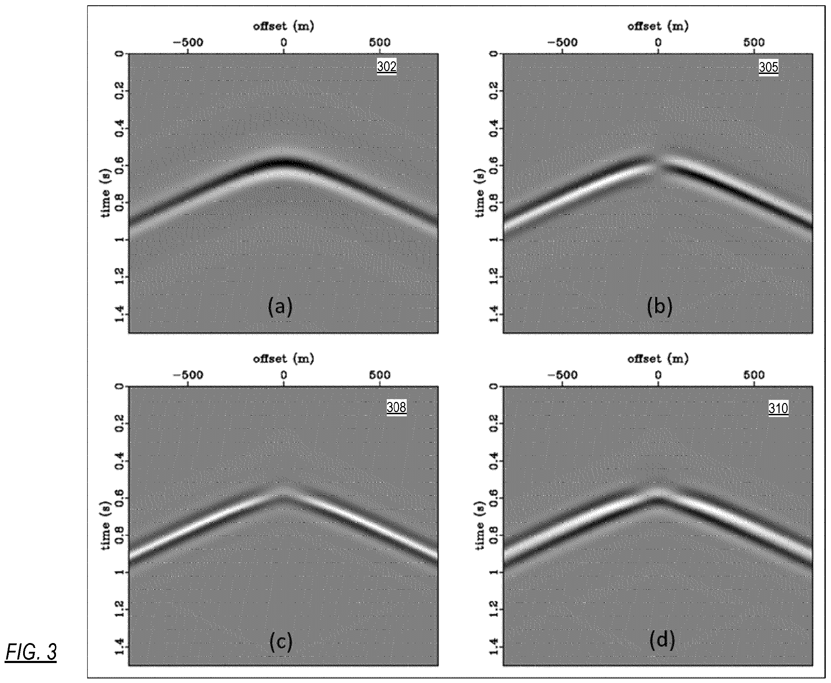

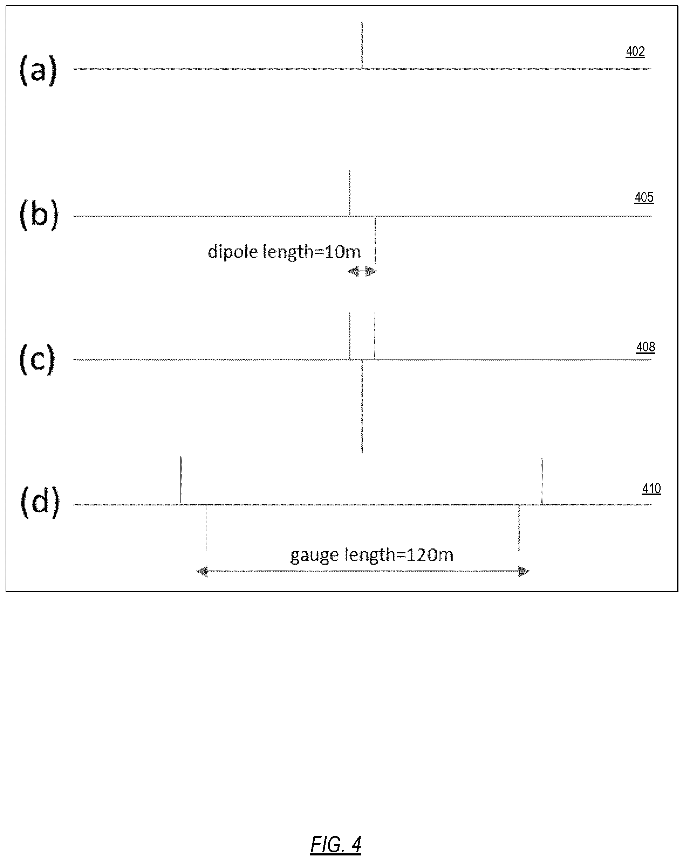

Turning to FIG. 3, the user interface (300) displays the seismic images (302), (305), (308), and (310) generated from different source functions. For each image, the x axis identifies the distance away from the injected source with 0 at the middle and the y axis identifies the depth under the surface. The seismic images (302), (305), (308), and (310) are generated from a seismic model into which sources are injected. The sources for the seismic images (302), (305), (308), and (310) are the sources shown in the source graphs (402), (405), (408), and (410) of FIG. 4. The seismic model used to generate the seismic images (302), (305), (308), and (310) was refined using distributed acoustic sensing data as described in the other figures.

Turning to FIG. 4, the user interface (300) displays the source graphs (402), (405), (408), and (410) with different seismic sources, which may be pressure gradient sources. The source graphs (402), (405), (408), and (410) visually depict the sources used to generate the seismic images (302), (305), (308), and (310) of FIG. 3. The source graph (402) depicts a pressure source. The source graph (405) depicts a pressure dipole source with a dipole length of 10 meters. The source graph (408) depicts a second-derivative pressure source. The source graph (410) depicts a second-derivative pressure source with gauge length of 120 meters. The different pressure sources depicted by the source graphs (402), (405), (408), and (410) are injected into a seismic model to generate synthetic receiver data depicted in the seismic images (302), (305), (308), and (310) of FIG. 3. The pressure sources depicted by the source graphs (402), (405), (408), and (410) may be used during the refinement of the model to improve the accuracy of the parameters of the model.

Embodiments may be implemented on a special purpose computing system specifically designed to achieve the improved technological result. Turning to FIG. 5.1 and FIG. 5.2, the special purpose computing system (500) may include one or more computer processors (502), non persistent storage (504), persistent storage (506), a communication interface (512) (*e.g*., Bluetooth interface, infrared interface, network interface, optical interface, *etc.*)*,* and numerous other elements and functionalities that implement the features and elements of the disclosure. The computer processor(s) (502) may be an integrated circuit for processing instructions. The computer processor(s) (502) may be one or more cores or micro-cores of a processor. The computer processor(s) (502) includes one or more processors. The one or more processors may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (508). The inputs may include text input, audio input, video input, *etc.,* which may be processed and transmitted by the computing system (500) in accordance with the disclosure. The communication interface (512) may include an integrated circuit for connecting the computing system (500) to a network (not shown) (*e*.*g*., a local area network (LAN), a wide area network (WAN) such as the Internet, mobile network, or any other type of network), and/or to another device, such as another computing device.

Further, the output device(s) (508) may include a display device, a printer, external storage, or any other output device. One or more of the output device(s) (508) may be the same or different from the input device(s) (510). The input device(s) (510) and the output device(s) (508) may be locally or remotely connected to the computer processor(s) (502). Many different types of computing systems exist, and the aforementioned input device(s) (510) and output device(s) (508) may take other forms. The output device(s) (508) may display data and messages that are transmitted and received by the computing system (500). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (500) in FIG. 5.1 may be connected to or be a part of a network. For example, as shown in FIG. 5.2, the network (520) may include multiple nodes (e.g., node X (522) and node Y (524)). Each node may correspond to a computing system, such as the computing system (500) shown in FIG. 5.1, or a group of nodes combined may correspond to the computing system (500) shown in FIG. 5.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes (e.g., node X (522) and node Y (524)) in the network (520) may be configured to provide services for a client device (526), including receiving requests and transmitting responses to the client device (526). For example, the nodes may be part of a cloud computing system. The client device (526) may be a computing system, such as the computing system (500) shown in FIG. 5.1. Further, the client device (526) may include and/or perform all or a portion of one or more embodiments of the disclosure.

The computing system (500) of FIG. 5.1 may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

As used herein, the term "connected to" contemplates multiple meanings. A connection may be direct or indirect *(e.g.,* through another component or network). A connection may be wired or wireless. A connection may be temporary, permanent, or a semi permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

1. A method comprising:
receiving sensor data sensitive to one or more of strain and strain-rate of a fiber;
selecting a set of discrete locations along the fiber to act as a set of reciprocal source points;
sorting the sensor data into a set of reciprocal source point gathers to generate sorted data;
modelling synthetic receiver data via reciprocity by injecting synthetic source data into a seismic model using the set of reciprocal source points; and
updating the seismic model to reduce error between the sorted data and the synthetic receiver data.

2. The method of claim 1, wherein modeling the synthetic receiver data further comprises:
injecting the synthetic source data as a pair of seismic sources separated by a gauge length.

3. The method of claim 1, wherein the seismic model is a full waveform inversion model and is one of an elastic model, a viscoelastic model, and an acoustic model.

4. The method of claim **1,** wherein receiving the sensor data further comprises:
receiving the sensor data acquired with a receiver system comprising the fiber as an optical fiber as part of a distributed acoustic sensor (DAS).

5. The method of claim **1,** wherein sorting the sensor data further comprises:
organizing the sensor data for a reciprocal source point gather, of the set of reciprocal source point gathers, to be for a discrete location for the reciprocal source point gather.

6. The method of claim **1,** wherein modeling the synthetic receiver data further comprises:
injecting the synthetic source data with directivity mimicking a directional response of a sensitivity to one or more of strain and strain-rate of the fiber.

7. The method of claim **1,** wherein modeling the synthetic receiver data further comprises:
recording a wavefield at a set of locations of a set of physical sources.

8. The method of claim 1, wherein updating the seismic model further comprises:
repeatedly modelling the synthetic receiver data and updating the seismic model to reduce the error.

9. The method of claim **1,** further comprising:
selecting an initial seismic model from which to update and form the seismic model.

10. The method of claim 1, further comprising:
presenting a seismic image generated from one or more of an initial seismic model and the seismic model.

11. A system comprising:
at least one processor; and
an application that, when executing on the at least one processor, performs stored operations comprising a method according to any one of the preceding claims.

12. A non-transitory computer readable medium comprising stored instructions executable by at least one processor to perform a method according to any one of the claims 1 - 10.
